# EUROPEAN PATENT APPLICATION

(11) **EP 4 574 790 A1**
(43) Date of publication of application: **25.06.2025**
(21) Application number: 23220071.7
(22) Date of filing: 22.12.2023
(51) Int. Cl.: C04B 26/00, C04B 28/04, C04B 28/06, C04B 28/14

(54) **NEW BIOBASED AND RECYCLED CONSTRUCTION MATERIAL FROM BIOGAS PLANT RESIDUES**

(71) Applicant: Sika Technology AG, 6340 Baar (CH)
(72) Inventor: Kelch, Steffen, 80848 Zürich (CH); Mamie, Tim, 80848 Zürich (CH); Huck, Wolf-Rüdiger, 80848 Zürich (CH); Goncalo, Paulo, 38070 St. Quentin Fallavier (FR)
(74) Representative: Sika Patent Attorneys

(57) **Abstract**

The invention describes a process for preparing a biobased binder from a solid residue, which is a dried solid digestate from biogas production, wherein the process comprises milling or macerating a slurry of the solid residue in solvent, preferably water, to form the binder. The invention is further directed to a construction material comprising or consisting of such a biobased binder and the use of such a construction material.

## Description

### Technical field

The present invention relates to a process for preparing a biobased binder from a solid residue, which is a dried solid digestate from biogas production, and to a construction material comprising or consisting of such a biobased binder. The present invention further relates to the use of such a construction material.

### State of the art

Most construction materials besides wood are of mineral origin. Conventional mineral-based construction materials often have hydraulic properties.

Examples of mineral-based construction materials are cement, furnace blast slag (slag sand), volcanic ashes (pozzolanic cement), gypsum and clay.

A severe problem of such conventional construction materials is their high carbon (CO₂) footprint. They are also not based on renewable resources and their extraction requires the exploitation of natural deposits.

In order to significantly reduce the carbon footprint of raw materials used for the production of construction materials, biobased raw materials as a partial or complete replacement for conventional mineral-based construction materials have attracted a great deal of attention.

However, the use of biobased raw materials as construction material may compete with food production and contribute to soil degradation of humus or nutrients in agriculture. Moreover, biobased raw materials are generally based on organic material. Organic materials are usually flammable so that flame-retardant properties are difficult to achieve.

In case of insulation foams based on biobased particles there is always a need to bind the particles together with a binder or adhesive and to add a significant amount of a flame retardant (> 20 wt.-%) in order to provide a minimum flame-retardancy or achieve self-extinguishing properties.

EP 3524699 A1 describes a process or producing building materials, such as bricks, lightweight aggregates and concrete, which building materials comprise a digestate obtained from a process of municipal solid waste treatment where one or more enzymes has been added to liquify the organic fraction of the municipal solid waste.

### Description of the invention

In view of this situation, an objective of the invention is to provide a binder for construction materials with a reduced carbon footprint, wherein the raw materials should preferably not compete with food production and/or not contribute to soil degradation of humus or nutrients in agriculture.

Moreover, the binder or construction materials containing the binder should have excellent flame-retardancy or self-extinguishing properties, as well as good strength and toughness after setting. The binder should preferably also have hydraulic, pozzolanic or latent hydraulic properties.

The inventors found that these objectives can be achieved when a solid organic residue from an industrial anaerobic digestion process such as municipal biogas plants, also called a digestate, is milled down or macerated under addition of solvent, in particular water. The resulting material is suitable as a binder and may even acquire hydraulic, pozzolanic or latent hydraulic properties. Without wishing to be bound to any theory it is assumed that during the milling or macerating operation not only the fibrous structure of the digestate is broken down, but also a further mainly aerobic biotechnological degradation process is initiated that activates cellulose, humin and lignin substances as well as mineral contaminations in a way that the resulting material acquires binding activity.

Accordingly, the invention is related to a process for preparing a biobased binder from a solid residue, which is a dried solid digestate from biogas production, wherein the process comprises milling or macerating a slurry of the solid residue in solvent, preferably water, to form the binder.

The binder obtained by the inventive process is a fully biobased and recycled material base. In view of the preferred consistency, this biobased binder can also be called a bioclay. The biobased binder obtained allows preparation of construction materials with improved CO₂ footprint and has the potential to contribute to a circular economy approach.

The biobased binder can be used as pure substance comparable to clay or can be used as matrix for composite materials with addition of further ingredients, e.g. inorganic or organic particulate filler or fibers or mineral binders, to modify the properties. The biobased binder as such or the composite materials containing the biobased binder are suitable as construction materials.

In contrast to conventional organic binder resins, the resulting construction materials have a natural flame-retardancy. In contrast to inorganic binder systems, the resulting materials have lightweight and thermal insulation properties.

The formed biobased binders have especially advantageous mechanical properties such as toughness and pressure resistance after setting. The addition of further ingredients such as fillers to the biobased binder can help to adjust the properties, e.g. in order to control shrinkage and crack formation during the drying/setting process and/or to improve water resistance of the formed composites.

The so formed biobased binder or construction material comprising the biobased binder can be used for example to produce solid shaped bodies, layers, composites, or foams with self-extinguishing properties.

In addition, the raw material base for the biobased binder is available in abundance and represents a recycled material that contributes to a circular economy.

In summary, a fully biobased and recycled binder can be obtained by the inventive process, which allows the realisation of construction materials with an improved carbon footprint. Moreover, the raw materials used for such a process do not compete with food production and do not contribute to soil degradation of humus or nutrients in agriculture. Furthermore, binders prepared via such a process can be used in construction materials with a minimum thermal insulation, good flame retardancy or even self-extinguishing properties, and good toughness and pressure resistance after setting.

### Detailed description of the invention

The inventive process prepares a biobased binder from a solid residue. The solid residue is a dried solid digestate from biogas production.

Biogas is produced in plants such as municipal biogas plants where a biodegradable feedstock is digested under anaerobic conditions, which produces biogas and, as a residue, digestate which includes a solid fraction and a liquid fraction. The solid digestate usually comprise residual indigestible material, process intermediaries, and dead microorganisms. The solid digestate is mainly an organic material, but can include inorganic matter such as metal parts, quartz or glass, calcium phosphate from animal bones, clay minerals, and/or other minerals suitable as nutrients. At present, the further treatment of the solid digestate include e.g. composting, incineration, and landfill disposal. The solid digestate is often dried due to the high moisture content. Such dried solid digestate is available on the market. It may still comprise residual water.

Examples of biodegradable feedstock used for biogas production are sewage sludge, animal wastes, crops, in particular energy crops, municipal waste, in particular municipal biodegradable waste, such as food or horticultural waste, agricultural waste or industrial organic wastes, such as food processing waste or waste from the starch or sugar industry. For instance, the dried solid digestate from municipal biogas plants is a suitable raw material for the inventive process.

The inventive process comprises milling or macerating a slurry of the solid residue in solvent, preferably water, to form the binder. The solid residue is a dried solid digestate from biogas production as outlined above. The solvent is added to the solid residue to form the slurry.

A suitable solvent is typically a polar solvent, preferably a polar protic solvent. The solvent should have a relatively high boiling point. Examples of suitable solvents are dimethyl sulfoxide (DMSO), tetrahydrofuran (THF), alcohols such as ethanol, propanol or butanol, glycols, glycerine, ionic liquids, water and mixtures of such solvents, such as a mixture of water and alcohol, ethanol, propanol or butanol.

The most preferred solvent is water.

The proportion of the solvent may vary. In a preferred embodiment, the amount of solvent, preferably water, in the slurry is in the range of 10 to 90% by weight, more preferably 20 to 70% by weight, even more preferably 40 to 60% by weight, based on the total weight of slurry of solid residue.

Accordingly, the amount of the solid residue in the slurry is in the range of 90 to 10 % by weight, preferably 30 to 80 % by weight, more preferably 60 to 40% by weight, based on the total weight of slurry of the solid residue.

According to one embodiment of the inventive process, the slurry of the solid residue in solvent, preferably water, is milled to form the binder. Milling of the slurry can be carried out in any suitable mill. Preferred mills for carrying out milling of the slurry are attrition mills. Especially suitable mills are semi-autogenous mills and compressive grinders, which belong to the group of attrition mills.

A compressive grinder within the present context is a type of grinder able to exert a compressive force on a bed of material to be ground. Preferably, the compressive force is exerted by rotating cylinders or a rotor-stator. A compressive grinder can for example be a crusher or a roller mill. According to some embodiments, the compressive grinder is a vertical roller mill, a horizontal roller mill, or jar crusher with controllable, adjustable compression. The compression force exerted onto the bed of the slurry can optionally be adjusted to predefined values. The residence time can preferably be adjusted through direct adjustment or circulation of the material to be treated.

Examples for a semi-autogenous mill are a ball mill or an agitation mill.

In a preferred embodiment, milling of the slurry is carried out in a mill selected from an attrition mill, a semi-autogenous mill or a compressive grinder, more preferably a ball mill or an agitation mill.

According to an alternative embodiment of the inventive process, the slurry of the solid residue in solvent, preferably water, is macerated to form the binder.

The term macerating here refers to a treatment of a material by wet shredding or wet comminution, respectively. The macerating of the slurry can be carried out in a macerator. A macerator is also known as a wet shredder. The macerating within the macerator can be adjusted by the pressure and friction settings within the macerator.

It is possible to add optional further ingredients to the slurry, for instance, in an amount of less than 10% by weight, preferably less than 5% by weight or less than 2% by weight, based on the total weight of the slurry. It is however particularly preferred that the slurry contains no other ingredients than the solid residue and solvent, preferably water. In particular, it is preferred that no enzymes are added to the slurry, i.e. the slurry is free of enzymes added.

The milling or macerating of the slurry can be effected at ambient temperature, e.g. at ambient temperatures in the range of 10 to 40°C. The temperature of the slurry may rise due to the milling or macerating operation. Cooling may be effected but is usually not necessary. It is also possible to heat the slurry before or during milling or macerating to higher temperatures, but this is usually not preferred.

The suitable milling or macerating time depends e.g. on the type of milling or macerating device, its operating conditions and the particular material used.

The milling or macerating time may be for instance in the range of 30 minutes to 24 hours. More preferably, the milling or macerating time is in the range of 2 hours to 20 hours, more preferably 4 hours to 18 hours or 6 hours to 15 hours.

Depending on the milling or macerating time, the type of milling or macerating device and the set conditions of the device, various degrees of fineness of the binder can be achieved. Typically, short milling or macerating times, e.g. about 2 to 4 hours, form binders with coarse or fine fibrous consistency, while longer milling or macerating times, e.g. more than 4 hours, such as 6 to 15 hours, e.g. about 12 hours, commonly provides binders with a clay-like consistency.

Depending on the fineness of the biobased binder, the binder or the construction material including the biobased binder may be used for the production of porous insulation panels, denser acoustic/fire protection panels, which could also be additionally physically foamed, and/or compact, block or panel-like materials or as layers in composites.

Preferably, the binder obtained has a fibrous or clay-like consistency. More preferably, the binder obtained has a clay-like consistency.

Typically, the slurry is milled or macerated in the presence of oxygen. That is, the milling or macerating of the slurry is preferably effected under aerobic conditions. In this regard, it is usually sufficient that the milling or macerating of the slurry is carried out in an oxygen-containing atmosphere, preferably air. In this way, a suitable oxygen concentration in the slurry can be achieved. It is also possible to actively introduce an oxygen containing gas such as air into the slurry during milling or macerating, but this is usually not necessary.

The solids content of the biobased binder obtained by the inventive process is preferably in the range of 90 to 10 % by weight, preferably 80 to 30 % by weight, more preferably 60 to 40% by weight.

The biobased binder can be used as it is obtained in the inventive process. It is also possible to dry the biobased binder obtained. This is in particular suitable to store or transport the binder. When the biobased binder has been dried, a subsequent re-activation of the binder by addition of solvent, preferably water, is necessary.

For this purpose, the dried biobased binder can be redispersed by addition of any of the previously mentioned solvents, in particular water. The redispersion of the dried bio-binder in the solvent may require longer swelling and/or mechanical treatment, which may be carried out in a suitable mixing device, e.g. in a kneader or a mill such as those mentioned above for the milling process. Optionally, the biobased binder may be milled prior to re-activation.

Using the biobased binder directly after production turned out to be an efficient way to use it. The use of the biobased binder after drying and grinding and subsequent re-activation is also possible. It is possible to store the biobased binder of the present invention for example in the form of powder, pellets, or blocks and subsequently use the biobased binder as additive in a construction material.

The invention also relates to a construction material comprising or consisting of a biobased binder, which is obtainable via an inventive process as described above. In this regard, the biobased binder is a milled or macerated slurry of the solid residue in solvent, preferably water. The solid residue and the solvent are as outlined above.

All aspects, proportions and embodiments described above for the inventive process also apply to the inventive construction material so that reference is made thereto.

The inventive construction material can be used as such or in combination with other additional components to prepare a final product or building material. In order to obtain the final product or building material the construction material is set or hardened. This can be achieved by allowing the construction material to dry. Setting or hardening of the construction material is preferably effected at ambient conditions, e.g. at an ambient temperature in the range of 10 to 40°C. The setting or hardening time may be e.g. in the range of 1 day to 3 months, preferably 1 day to 2 months, more preferably 1 day to 1 week.

It is also possible to accelerate the setting or hardening of the construction material by using increased temperature or a burning process similar to the hardening processes for clay-based construction materials, however this is usually not preferred.

The inventive construction material may consist of the biobased binder obtainable by the inventive process. In another embodiment, the inventive constructive material may comprise the biobased binder obtainable by the inventive process and at least one additional component. The addition of at least one additional component can be suitable to adjust certain properties of the construction material.

For instance, the at least one additional component in the construction material can be advantageous for shrinkage control, and mechanical properties. In this regard, at least one additional component selected from mineral binders, fillers, lignin, and zeolites are found suitable. Calcium aluminate cement, gypsum, slag sand, calcium carbonate or shredded corn stalks can be mentioned as specific examples, which showed significant improvement in this regard.

The at least one additional component in the construction material can be advantageous for control of water uptake. In this regard, at least one additional component selected from mineral binders, fillers, lignin, and zeolites are found suitable. Portland cement, gypsum, calcium aluminate cement, slag sand, coated calcium carbonate can be mentioned as specific examples which showed significant improvement in this regard.

The addition of an organic binder may be suitable to increase the binding efficiency of the construction material.

Accordingly, in a preferred embodiment, the construction material comprises at least one additional component selected from a mineral binder, an organic binder, a filler, zeolite and lignin.

The addition of at least one of the above-described additional components can support control of shrinkage during the drying/setting process, improve water resistance of the set construction material, and/or improve the binding properties of the construction material. On the other hand, additional components such as mineral binders or filler may decrease the mechanical strength of the set construction material.

Depending on the type and the amount of the additional component added to the construction material, it may sometimes be suitable to add additional water as an additional component to the construction material.

Suitable examples for the mineral binder used as an additional component are cement, gypsum or clay. The gypsum may be in form of the hemihydrate or anhydrite. The cement is preferably selected from Portland cement and calcium aluminate cement. Examples for clay are Kaolin clay or bentonite. The biobased binder can be mixed with clay in any mixing proportions.

Suitable examples for the organic binder are polyacrylate, polystyrene or polystyrene-butadiene, polyvinylacetate or poly-(co-vinylacetate-ethylene) (EVAC), and polyurethane aqueous dispersions (PUD).

The filler may be selected from a particulate filler and/or a fibrous filler. The fibrous filler is preferably an organic fibrous filler, in particular a natural fiber. Suitable examples are shredded corn stalks, hemp fibers, and corn fibers. The particulate filler is preferably an inorganic particulate filler. Suitable examples are slags from steel and copper production processes, slag sand, fly ash, aluminium trihydroxide, silica, quartz or calcium carbonate, which may be uncoated or coated calcium carbonate. Aluminium trihydroxide is known as a flame-retardant material. Examples of slags are blast furnace slag (HOS) and electric arc furnace slag (EOS).

An example for a suitable lignin is Kraft lignin or lignins from biotechnological processing of wood, grass and straw.

Preferred examples of additional components for the construction material are Portland cement, calcium aluminate cement, gypsum, slag sand, coated or uncoated calcium carbonate, polyacrylate, polyvinylacetate or poly-(covinylacetate-ethylene), or shredded corn stalks or grass like miscanthus.

The proportion of the biobased binder in the construction material may vary in wide ranges depending on the application desired. As outlined above, the biobased binder comprises solvent, preferably water. In this regard, indications of the weight of the biobased binder here includes also the solvent content, preferably water content, contained therein, unless otherwise stated. Here the construction material refers to the "fresh" material, which is still shapeable. During setting of the construction material partial or complete removal of the solvent, preferably water, may occur. Preferably, water is removed by evaporation.

Generally, the proportion of the biobased binder in the construction material may be e.g. at least 5 % by weight, preferably at least 25 % by weight, more preferably at least 50% by weight, still more preferably at least 70 % by weight, especially at least 80 % by weight, based on the total weight of the construction material. As outlined above, the construction material may consist of the biobased binder (100% by weight).

The addition of the additional components may be advantageous to improve certain properties as discussed above. Often the improvement achieved is not linearly correlated with the amounts added so that relatively low amounts of the additional component may have similar effects than higher amounts. Moreover, some of the additional components used such as fillers or mineral binders can decrease the strength properties of the construction material.

As a result, in preferred embodiments, the amount of the at least one additional component in the construction material may be e.g. in the range of 3 to 40% by weight, preferably 5 to 26% by weight, more preferably 10 to 20% by weight, based on the total weight of the construction material (biobased binder and the at least one additional component). The ranges indicated are particularly suitable for additional components, which are not fibers, in particular organic fibers. When fibers, in particular organic fibers are used as additional components, low amounts are more suitable, since the strength of the product obtained decreases significantly with high amounts. The amount of the at least one additional component in the construction material may be e.g. in the range of 3 to 10% by weight, preferably 3 to 8% by weight, based on the total weight of the construction material.

The invention also relates to the use of the inventive construction material, as described above, as a flame-retardant construction material. As discussed above, the construction material has flame retardant and even self-extinguishing properties.

All aspects, proportions and embodiments described above for the inventive process or inventive construction material also apply to the inventive use so that reference is made thereto.

In particular, the inventive construction material may be used for preparing products made of the construction material alone or composite products which contains at least one element made of the construction material, e.g. in form of a layer or a coating, and one or more further building elements, e.g. made of other construction materials, such as adhesives, coatings, supporting or reinforcing elements, such as meshes, wires, building elements etc.

The use of the construction material generally includes forming the construction in the desired shape, optionally in combination with other construction materials, and setting the construction material to obtain the desired product or composite product. The forming of the construction material may include a compression of the construction material. Suitable setting conditions have been discussed above.

The inventive construction material may be used e.g. to produce solid composites or foams with flame retardant or self-extinguishing properties.

In preferred embodiments, the inventive construction material is used for the preparation of insulation panels, compact building components or layers of a composite material. Compact or foamed building components may be in form of a block or a panel.

A preferred use of the construction material is the use for the preparation of insulation panels, wherein the insulation panel can be a porous insulation panel or an acoustic and/or fire protection panel, which can be foamed, e.g. by physical foaming of the construction material.

In a preferred embodiment, the insulation panel may be in form of a sandwich panel comprising a rigid core sandwiched between two supporting elements. The core is made of the inventive construction material, which may be foamed, e.g. by physical foaming. The two supporting elements may be structural boards or meshes such as glass fiber meshes. On each side of the core, one or more glass fiber meshes, e.g. two glass fiber meshes, may form the supporting element. The supporting element, in particular the glass fiber mesh, may be provided with a coating, e.g. a hydrophobizing coating, e.g. a poly-(coethylene-vinylchloride) coating or a polysiloxane coating. The supporting element, in particular the glass fiber mesh, may be also provided with a flame-retardant agent such as aluminium trihydroxide.

Flammability tests on the set construction materials were based on EN ISO 11925-2: exposure to a 3 cm gas flame for 15 s, observation of ignitability for 20 s.

Depending on the degree of density, after setting of the construction material, the set product obtained is hard to inflame or not inflammable with a Bunsen burner, in particular when the construction material includes up to 30% by weight mineral additives. Samples of a set densely packed pure biobased binder according to the invention are almost not inflammable.

The thermal conductivity of the set construction material depends on the density and may be in the range of 0.05-1.2 W/m•K.

The invention is further described in the following examples, which are intended to exemplary illustrate the invention and not intended to limit the scope of the invention in any way.

### Examples

### Example 1 - Preparation of biobased binder

The milling or grinding process for preparing a biobased binder was carried out under air in a drum mixer with a volume of 130 L. 6 kg of solid dried digestate, 6 kg of water and 15 kg steel balls with a diameter of 20-30 mm were added into the drum mixer and the material was rotated and milled down for 6-18 hours at a speed of 30 revolutions/min.

The biobased binder obtained had a solids content of 50% by weight. The binder has clay-like consistency ("bioclay").

A biobased binder having a solids content of 45% by weight could be prepared in a similar process. The binder has clay-like consistency ("bioclay")

### Example 2 - Preparation of construction materials and specimens for testing

Construction materials were prepared from biobased binders obtained according to Example 1. The construction materials were prepared from the biobased binder alone or from the biobased binder in combination with additional components. The types of additional components and the amounts used are shown in following Tables 1 to 4.

The test specimens of the construction material were prepared by mixing the input materials thoroughly on a laboratory mixer (when additional components are added). The wet mixture was then poured into a Teflon mould and allowed to dry at 25°C/50% RH (room humidity). Tests were carried out after 28 days of drying.

The following test were carried out on the test specimens prepared. The results are shown in Tables 1 to 4.

Swelling in water: Samples were completely submersed in deionized water for the time indicated. The water uptake was determined as the weight gain after submersion. Surface water was carefully removed with a dry cloth before measurement. The water uptake in wt.% is given relative to the weight of the test specimen before submersion in water.

Extinction time: The extinction time is determined according to standard EN ISO 11925-2 as the time after which the sample does not show flame anymore.

Compression strength, elongation, and tensile strength were measured according to industry standard.

### Example 3 - Preparation of insulation panels using construction material

An EVAC-copolymer prefoam is used to produce a fluffy foamed mass. The construction material including the bioclay as prepared in Example 1 is added to the fluffy foamed mass to produce a compact but lightweight composite structure. A natural wax, especially produced from sugar cane waste, is added for hydrophobizing the material. The aqueous binder is activated in a heat press. The formed material is packed in between two non-woven layers from inorganic material (glass fiber mesh). To guarantee self-extinguishing properties more than 20wt.-% of an inorganic flame-retardant such as aluminium trihydroxyde (ATH) are added to the material. For waterproofing of the surface an aqueous alkoxy silane dispersion coating is applied using a standard Sikagard hydrophobizing agent (Sikagard 703W).

The type/treatment of the glass meshes in the test samples is siloxane coated double mesh.

The following test were carried out on the insulation panel prepared. The results are shown in Tables 5 and 6.

Extinction time was measured as described above.

Compression strength and Bending stress (3-point bending) was measured according to industry standard.

Thermal conductivity λ (W/m•K): measured using the hot-wire method on a TELEPH CT-meter with an 8 cm long flat wire probe placed between two 14cm x 16cm x 4cm prismatic specimens and a heating time of 180 seconds. Water uptake by capillary absorption was tested according to standard EN 13057.

The density of the insulation panels and its cutting behaviour was also tested.

**Table 1: Construction materials with mineral binders and aluminium trihydroxide filler**

| **Biobased binder, 45 wt.-% solids [g]** | **Portland cement [g]** | **Gypsum [g]** | **Aluminium-trihydroxyde, ATH [g]** | **Calcium-aluminat cement, Ternal W [g]** | **Calcium-aluminat cement, Secar 80 [g]** | **H2O [g]** | **swelling in water wt. uptake after 1h, 6 h, 24 h [%]** | **Extinction time [s]** | **Compression strength [MPa]** | **Elongation at omaxh [%]** |
|---|---|---|---|---|---|---|---|---|---|---|
| 150 | | | | | | | 58/63/70 | 0 | 4.07 | 6.5 |
| 130 | 20 | | | | | | 45/48/50 | 0 | 2.08 | 2.6 |
| 110 | 40 | | | | | | 38/43/41 | 0 | 1.13 | 2.7 |
| 90 | 60 | | | | | 10 | 34/35/34 | 0 | 0.993 | 2.1 |
| 130 | | 20 | | | | | 50/56/57 | 0 | 2.14 | 5.6 |
| 110 | | 40 | | | | | 42/46/47 | 0 | 2.09 | 5 |
| 90 | | 60 | | | | 10 | 24/31/30 | 0 | 1.6 | 2.4 |
| 130 | | | 20 | | | | 47/56/63 | 0 | 2.93 | 5.1 |
| 110 | | | 40 | | | | 50/49/56 | 0 | 1.05 | 4.6 |
| 90 | | | 60 | | | 10 | 52/57/55 | 0 | 1.2 | 2.9 |
| 130 | | | | 20 | | | 52/50/52 | 0 | 2.01 | 4.1 |
| 110 | | | | 40 | | | 38/41/41 | 0 | 1.87 | 2.6 |
| 90 | | | | 60 | | 10 | 37/40/43 | 0 | 0.725 | 1.3 |
| 130 | | | | | 20 | | 44/46/50 | 0 | 3.34 | 4.6 |
| 110 | | | | | 40 | | 40/40/43 | 0 | 2.36 | 3.4 |
| 90 | | | | | 60 | 10 | 35/35/37 | 0 | 2.63 | 3.5 |

**Table 2: Construction materials with inorganic fillers**

| **Biobased binder, 45wt.-% solid [g]** | **Blast furnace slag [g]** | **Electro furnace slag [g]** | **Calcium carbonate, Omyacarb 5 GU [g]** | **Calcium carbonate, Omyacarb BSH [g]** | **Quartz flour [g]** | **H2O [g]** | **swelling in water wt. uptake after 1h, 6 h, 24 h [%]** | **Extinction time [s]** | **Compression strength [MPa]** | **Elongation at omaxh [%]** |
|---|---|---|---|---|---|---|---|---|---|---|
| 150 | | | | | | | 58/63/70 | 0 | 4.07 | 6.5 |
| 130 | 20 | | | | | | 50/54/57 | 0 | 1.68 | 4.2 |
| 110 | 40 | | | | | | 45/47/50 | 0 | 1.82 | 3.3 |
| 90 | 60 | | | | | 10 | 42/45/-- | 0 | 1.5 | 1.7 |
| 130 | | 20 | | | | | 51/57/50 | 0 | 2.42 | 5.7 |
| 110 | | 40 | | | | | 45/45/39 | 0 | 1.82 | 3.5 |
| 90 | | 60 | | | | 10 | 40/41/44 | 0 | 1.31 | 3 |
| 130 | | | 20 | | | | 50/55/61 | 0 | 2.22 | 5.5 |
| 110 | | | 40 | | | | 45/53/49 | 0 | 1.59 | 3 |
| 90 | | | 60 | | | 10 | 40/64/-- | 0 | 1.4 | 1.6 |
| 130 | | | | 20 | | | 52/45/50 | 0 | 2.52 | 4.4 |
| 110 | | | | 40 | | | 98/43/46 | 0 | 1.35 | 2.8 |
| 90 | | | | 60 | | 10 | 22/40/43 | 0 | 0.985 | 5.2 |
| 130 | | | | | 20 | | 51/56/60 | 0 | 2.07 | 4.4 |
| 110 | | | | | 40 | | 41/46/53 | 0 | 1.91 | 5 |
| 90 | | | | | 60 | 10 | 16/46/49 | 0 | 1.18 | 2 |

**Table 3: Construction materials with organic fibers and lignin**

| **Biobased binder, 45wt.-% solid [g]** | **Hemp fiber [g]** | **Corn fiber [g]** | **Kraft-Lignin [g]** | **H2O [g]** | **swelling in water wt. uptake after 1h, 6 h, 24 h [%]** | **Extinction time [s]** | **Compression strength [MPa]** | **Elongation at omaxh [%]** |
|---|---|---|---|---|---|---|---|---|
| 150 | | | | | 58/63/70 | 0 | 4.07 | 6.5 |
| 130 | 10 | | | | 83/90/95 | <5 | 2 | 6.3 |
| 130 | 5 | | | | 84/78/91 | 0 | 1.9 | 8.2 |
| 130 | | 20 | | | 95/114/104 | <5 | 1.65 | 6.2 |
| 130 | | 10 | | | 82/84/82 | 0 | 2.42 | 6.9 |
| 130 | | 5 | | | 66/69/78 | 0 | 2.66 | 7.4 |
| 130 | | | 20 | | 33/66/68 | <3 | 1.37 | 3.8 |
| 110 | | | 40 | | 63/69/73 | <5 | 1.28 | 2.2 |

**Table 4: Construction materials with clay and inorganic fillers**

| **Biobased binder 50wt.-% solid [g]** | **Kaolin clay [g]** | **Nanoclay Bentoni te [g]** | **Zeolite [g]** | **Lignova crude Lignin [g]** | **Silica Aerosi l 200 [g]** | **Zeolite 3A [g]** | **H2O [g]** | **swelling in water wt. uptake after 1h, 6 h, 24 h [%]** | **Extinc tion time [s]** | **Compression streng th [MPa]** | **Elongation at omaxh [%]** | **Density g/mL** |
|---|---|---|---|---|---|---|---|---|---|---|---|---|
| **150** | | | | | | | | 45/49/54 | | 6.85 | 7.1 | 1.105 |
| 130 | 20 | | | | | | 5 | 54/62/66 | 0 | 4.4 | 4.3 | 1.115 |
| 110 | 40 | | | | | | 15 | 55/46/86 | 0 | 2.75 | 3.7 | |
| 90 | 60 | | | | | | 30 | 100/133/142 | 0 | 1.73 | 4.5 | |
| 130 | | 20 | | | | | 5 | 59/145/200 | 0 | 8.97 | 6.4 | |
| 110 | | 40 | | | | | 15 | 22/35/184 | 0 | 8.45 | 10.8 | |
| 90 | | 60 | | | | | 30 | 61/111/266 | 0 | 6.28 | 5.6 | |
| 130 | | | 20 | | | | 10 | 58/62/56 | 0 | 4.86 | 5.3 | 1.01 |
| 110 | | | 40 | | | | 17.5 | 65/77/55 | 0 | 2.42 | 4.4 | |
| 90 | | | 60 | | | | 35 | 64/55/55 | 0 | 2.61 | 2.8 | |
| 130 | | | | 20 | | | 10 | 49/53/57 | 0 | 3.96 | 3.3 | 1.055 |
| 110 | | | | 40 | | | 35 | 51/54/58 | <3 | 3.32 | 4.5 | |
| 90 | | | | 60 | | | 60 | 56/62/61 | <10 | 1.69 | 3.5 | |
| 130 | | | | | 10 | | 15 | 48/51/57 | 0 | 4.31 | 4.1 | |
| 110 | | | | | 20 | | 35 | 63/67/63 | 0 | 2.84 | 3.9 | |
| 130 | | | | | | 20 | 15 | 52/53/63 | 0 | 4.07 | 5.3 | |

**Table 5: Insulation panels and characterization**

| Foamed wallpap or glue [wt%] | EVA [wt%] | ATH [wt%] | Glass fiber mesh | EVC or siloxane coating | Biobased binder [wt%] | Corn fiber [wt%] | Extinction time [s] | Compression strength [MPa] | Bending stress (3-point bending) [MPa] | Density [g/ml] |
|---|---|---|---|---|---|---|---|---|---|---|
| 0.9 Lightcrete | 7.4 | 13.9 | double | siloxane coated | 69.5 | 7.0 + 1.4 wt.% sugar cane wax | Self extingui sing | 4.4 | 0.8 | 0.61 |

| | | | | | | | | | | |
|---|---|---|---|---|---|---|---|---|---|---|
| EVA = poly-(co-vinylacetate-ethylene), ATH = aluminiumtrihydroxyde, EVC = poly-(co-ethylene-vinylchloride) | | | | | | | | | | |

## Claims

1. A process for preparing a biobased binder from a solid residue, which is a dried solid digestate from biogas production, wherein the process comprises milling or macerating a slurry of the solid residue in solvent, preferably water, to form the binder.

2. The process according to claim 1, wherein the amount of solvent, preferably water, in the slurry is in the range of 10 to 90% by weight, preferably 20 to 70% by weight, more preferably 40 to 60% by weight, based on the total weight of the slurry of the solid residue.

3. The process according to any one of claims 1 or 2, wherein the milling or macerating time is in the range of 30 minutes to 24 hours, preferably 2 hours to 20 hours, more preferably 4 hours to 18 hours, still more preferably 6 hours to 15 hours.

4. The process according to any one of the preceding claims,
wherein milling of the slurry is carried out in a mill selected from an attrition mill, a semi-autogenous mill or a compressive grinder, preferably a ball mill or an agitation mill, or
wherein macerating of the slurry is carried out in a macerator.

5. The process according to any one of the preceding claims,
wherein no enzymes are added to the slurry, and/or
wherein the binder obtained has a fibrous or clay-like consistency, preferably a clay-like consistency.

6. The process according to any one of the preceding claims,
wherein the biobased binder obtained is a hydraulic binder, a pozzolanic binder or a latent hydraulic binder, and/or
wherein the biobased binder is dried and can be subsequently reactivated by addition of solvent, preferably water.

7. The process according to any one of the preceding claims, wherein the slurry is milled or macerated in the presence of oxygen.

8. A construction material comprising or consisting of a biobased binder which is obtainable by a process according to any one of claims 1 to 7.

9. The construction material according to claim 8, comprising at least one additional component selected from a mineral binder, an organic binder, a filler, zeolite and lignin.

10. The construction material according to any one of claims 8 or 9, wherein the mineral binder is selected from at least one of cement, gypsum, or clay, wherein the cement is preferably selected from Portland cement or calcium aluminate cement,
the organic binder is selected or poly-(co-vinylacetate-ethylene),
the filler is selected from at least one of fibrous fillers, preferably organic fibrous fillers, in particular natural fibers such as shredded corn stalks,
and particulate fillers, preferably inorganic particulate fillers, in particular slag sand, aluminium trihydroxide, or calcium carbonate, such as coated or uncoated calcium carbonate.

11. The construction material according to any one of claims 8 to 10, wherein the proportion of the biobased binder is at least 5 % by weight, preferably at least 25 % by weight, more preferably at least 50% by weight, still more preferably at least 70 % by weight, especially at least 80 % by weight, based on the total weight of the construction material.

12. Use of a construction material according to any one of claims 8 to 11 as a flame-retardant construction material.

13. The use according to claim 12 for the preparation of insulation panels, compact building components or layers of a composite material.

14. The use according to claim 13, wherein the insulation panel is a porous insulation panel or an acoustic and/or fire protection panel, which may be foamed.
